# EUROPEAN PATENT SPECIFICATION

(11) **EP 1 438 484 B1**
(45) Date of publication and mention of the grant of the patent: **27.12.2006**
(21) Application number: 02775598.2
(22) Date of filing: 14.10.2002
(51) Int. Cl.: E21B 43/36

(54) **AN INSTALLATION FOR THE SEPARATION OF FLUIDS**
ANLAGE ZUR TRENNUNG VON FLUIDEN
INSTALLATION PERMETTANT DE SEPARER DES FLUIDES

(30) Priority: 17.10.2001 NO 20015048
(43) Date of publication of application: 21.07.2004
(73) Proprietor: NORSK HYDRO ASA, 0240 Oslo (NO)
(72) Inventor: GRAMME, Per, Eivind, N-3931 Porsgrunn (NO)
(74) Representative: Bleukx, Lucas Lodewijk M.
(86) International application number: PCT/NO2002/000370
(87) International publication number: WO 2003/033872

(56) References cited:
- WO-A1-00/08302
- WO-A1-01/00296
- WO-A1-95/03868
- US-A- 6 010 674
- US-B1- 6 277 286

## Description

The present invention concerns an installation arranged on the sea bed for the separation of fluids.

Fluids in this context means oil, gas and water or mixtures of these substances, possibly containing particles of sand, that are produced in connection with the extraction of oil/gas from wells in geological formations beneath the sea bed.

PCT/NO98/00085 concerns the separation of fluids in pipe separators in horizontal sections of wells.

The main reason why it is possible to achieve quantitative oil and water separation in a pipe separator installed in a horizontal well is related to the good separation properties of the well fluid. The main reason for the good separation properties in the well is that the interface between the oil and water is relatively free of surfactants that can stabilise the interface and thus impede drop growth and the formation of a free aqueous phase in connection with coalescence. This is what makes it possible to use such separation solutions in the well, where controlled use of a de-emulsifier is very complicated or virtually impossible.

WO01/00296 relates to an apparatus to be used on an oil production platform for the separation of a fluid flowing through a pipeline into a light fraction and heavier fraction. The apparatus, which is based on cyclone principle, includes an essentially tubular casing with an inner spin element for rotaion of the fluid flow being located at the upstream end of the casing, and a control separator connected to a discharge element formed of a pipe axially provided within the tubular casing.

In many cases, it may be desirable to carry out the separation on the sea bed instead of in the wells or on the platform. On the sea bed, chemical destabilisation of the crude oil using a de-emulsifier is a much simpler and absolutely realistic solution. Chemical destabilisation of the fluid can improve the separation properties of the fluid so that they are almost as good as down-hole conditions. This makes it possible to use pipe separator technology on the sea bed in connection with sea bed processing plants. With a sea bed installation, there is also greater freedom with regard to the choice of separator diameter than with a down-hole installation.

Conventional gravitation separators are characterised by large tank diameters. This limits the application of the technology to relatively shallow waters. Long, thin separators with high UD ratios are favourable for use at large sea depths.

Under typical sea bed conditions, the separation properties of the oil/water fluid will always be poorer than under down-hole conditions. This difference can be compensated for by placing the separator upstream of the choke when using a de-emulsifier or ultrasound. This makes it possible to use pipe separators on the sea bed. In practice, the pipe separator can be a transport pipeline designed with a slightly larger diameter than necessary or as an extended section of the transport pipeline. The pipe separator is an effective solution to the design problem caused by high external liquid pressure at large sea depths. The technology can be combined with CEC (Compact Electrostatic Coalescer) concepts based on pipe coalescers, which allows it to be used at larger sea depths. For fluids that are more difficult to separate, a CEC is necessary to achieve the product specifications of the oil phase and to eliminate downstream hydrate precipitation problems in this flow.

The advantages of using a pipe separator in a sea bed processing plant are, among other things, that it allows:
- bulk gas/oil/water separation
- removal of water from crude oil to product specifications
- purification of production water to a quality that allows reinjection
- purification of production water to a quality that allows it to be discharged
- chemical-free hydrate control in connection with the transport of crude oil and gas.

In the main, the pipe separator produces bulk oil/water separation. For lighter, simpler crude oil systems, the separator will be able to separate the fluid down to product specifications. In this case, no further separation unit is required in the process. The pipe separator is designed as follows. The last part of the transport pipeline from the well head to the processing template is designed as a long, thin pipe separator. On account of its small pipe diameter (in the order of 0.5 m), the separator can be operated at high external pressure and low internal pressure. The separator is therefore particularly well suited for large sea depths. It is important for the water quality from the separator to be as good as possible in order to avoid, as far as possible, any further purification before injection/discharge. The separator can therefore be fitted with a mechanical ultrasound-based emulsion destabilisation system instead of using a chemical de-emulsifier. This solution will be able to produce a water quality that is suitable for reinjection (<< 1000 ppm) and possibly for discharge into the sea (< 40 ppm). A particularly favourable position for the pipe separator will be at the well head before any pressure relief.

The separator is designed as a three-phase separator with configuration options that allow for separate removal of gas, oil and water or, alternatively, gas/oil as a common flow and water as a separate flow. In addition, it must also be possible to design the separator as a two-phase oil/water separator for use downstream from a CEC (Compact Electrostatic Coalescer).

The separator can be fitted with an ultrasound-based destabilisation system for the emulsion layer at the oil/water interface (as an alternative to the use of chemicals to break up emulsions). The separator is also fitted with a double set of level profile meters (alternatives: gamma, capacitance and ultrasound). The end of the pipe separator is connected to the template either directly or via flexible hoses.

The present invention is characterised by the features as defined in the attached independent claim 1.
Advantageous embodiments of the invention are defined in the independent claims 2-4.

The present invention will be described in further detail in the following by means of examples and figures, where:
- Figure 1: shows an installation on the sea bed with a pipe separator for gas/liquid separation.
- Figure 2: shows a first alternative embodiment of an installation with a pipe separator for gas/oil/water separation.
- Figure 3: shows a second alternative embodiment of an installation with two pipe separators in series, the first for gas/liquid separation and the second for oil/water separation.
- Figure 4: shows a third alternative embodiment of an installation with a pipe separator for gas/oil/water separation followed by a compact electrostatic coalescer and subsequently a pipe separator for oil/water separation.
- Figure 5: shows a fourth alternative installation with a pipe separator for gas/oil/water separation followed by a compact electrostatic coalescer and subsequently a pipe separator for oil/water separation. In addition, there is a gas dehydration unit consisting of a pipe contactor and a gas/liquid separator in connection with the first pipe separator.
- Figure 6: shows a fifth embodiment which is based on the solution shown in Figure 4, but which is adapted for situations in which two or more wells produce different quantities of oil/water/gas.

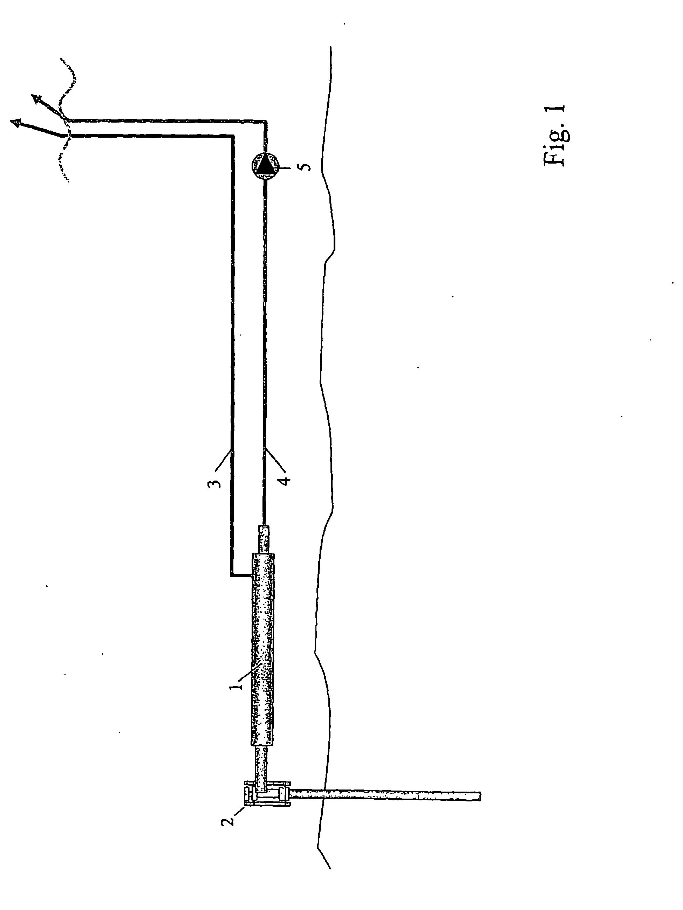

Figure 1 shows an installation arranged on the sea bed with a separator in the form of a pipe (pipe separator) 1 for gas/liquid separation that is connected to a well head 2. This is a simple solution designed for use for oil/gas wells in which small quantities of water are produced. The separated gas is removed in a pipe 3 and fed up to a platform, a production ship, etc. on the surface of the sea or a collecting pipeline that feeds the gas onto shore. The liquid is removed in a pipe 4, and a pump 5 pumps it up to the surface or onto shore as for the gas.

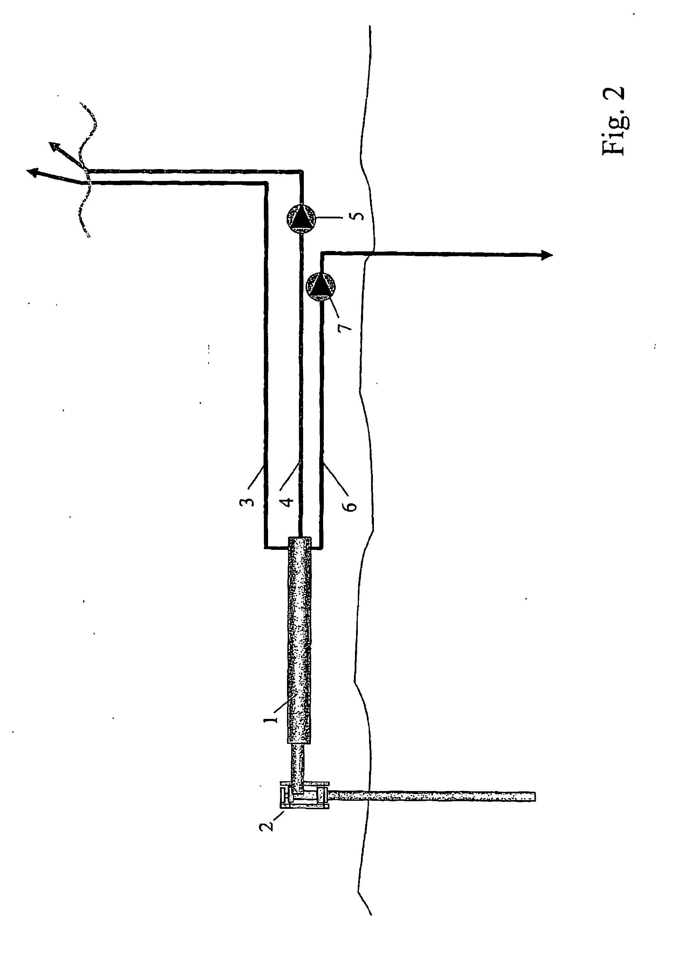

Figure 2 shows a similar installation to that in Figure 1. However, in addition to gas and oil, the separator here also separates out water that is fed via a pipe 6 to a pump 7 and back to the reservoir.

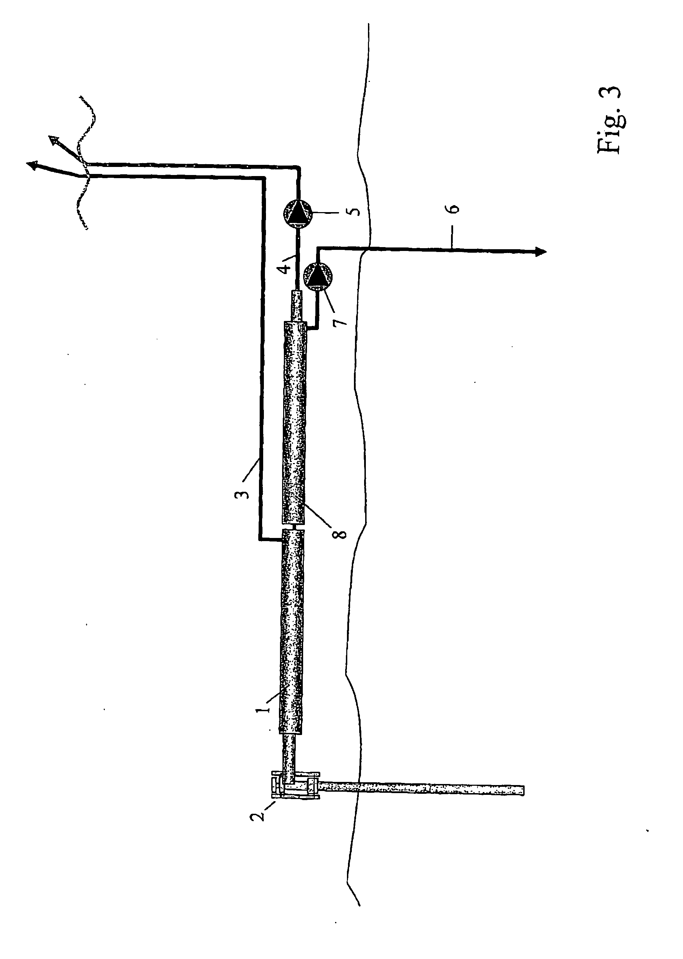

Figure 3 shows a sea bed installation designed for conditions with a lot of gas in relation to liquid. The solution is like that in Figure 1 but the liquid (oil and water) that is separated out in a first separator 1 is fed to a second separator 8 where the oil is fed to the surface via the pipe 4 and the pump 5, while the water is reinjected by means of the pump 7 via the pipe 6.

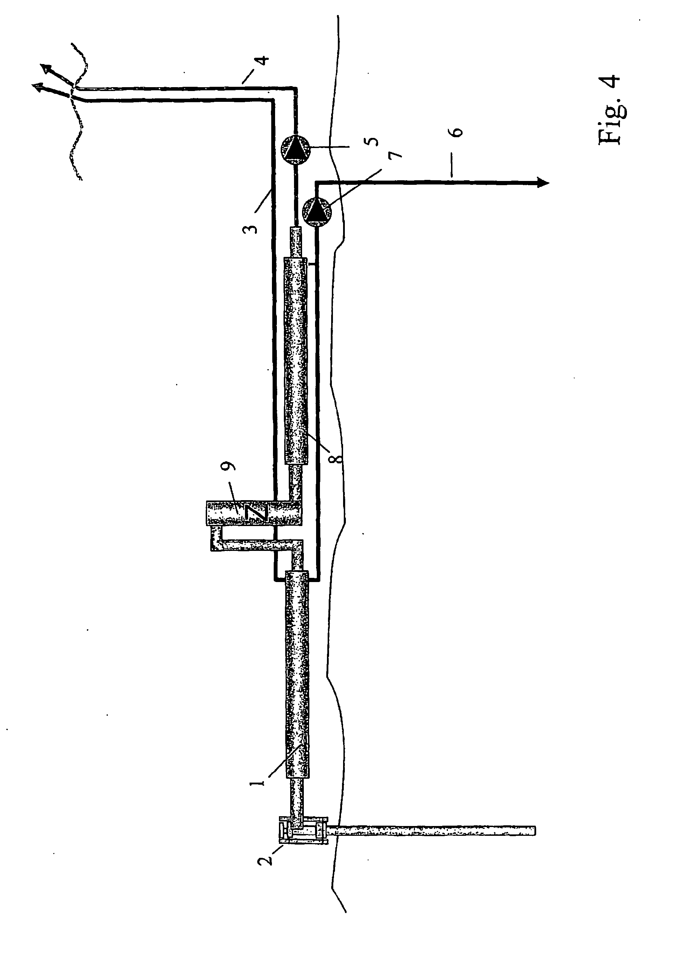

Figure 4 shows a sea bed processing plant designed for heavier oils and represents a further development of the installation shown in Figure 3. The pipe separator 1, which, in this case, is designed for gas/oil/water separation, is connected to the well head 2. The gas is removed in the pipe 3 and fed to the surface. The oil and water proceed to a compact electrostatic coalescer (CEC) 9 that increases the drop size of the water. The oil and water are then separated in a second pipe separator 8 for oil/water separation. The oil is removed in the pipe 4 and pumped to the surface by the oil pump 5, while the water is reinjected via the pipe 6 and the reinjection pump 7.

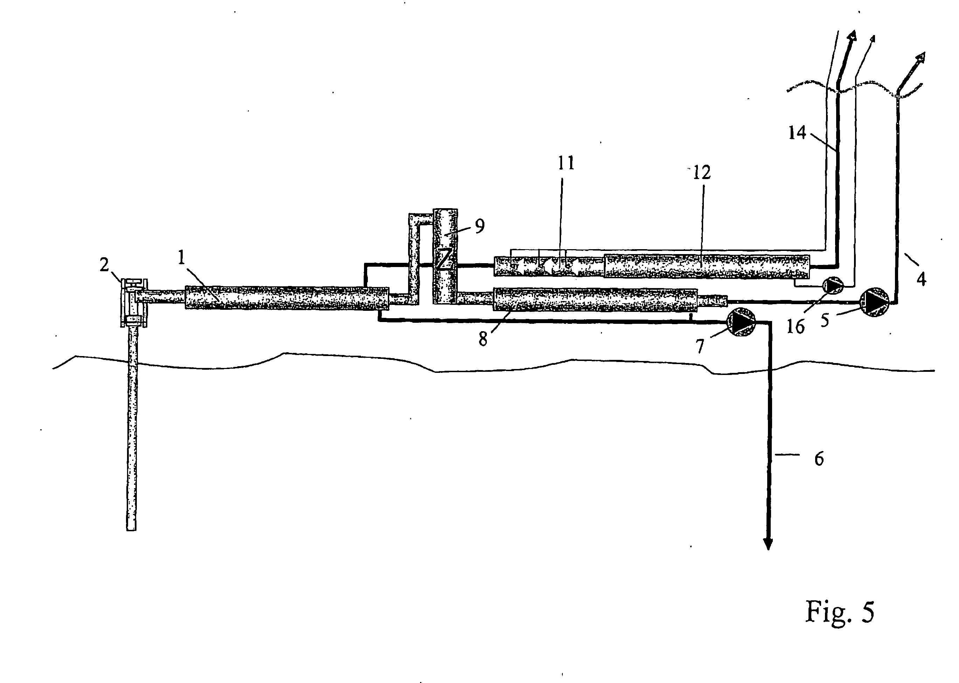

Figure 5 shows a sea bed installation that, in addition to that which is shown in Figure 4, has a gas dehydration unit. The gas that is separated out in the first separator 1 is fed first to a gas dehydration reactor 11. Here, glycol is added that "reacts with" the water in the gas. The gas and the liquid (water dissolved in glycol) are then fed to a third separator 12, which, in turn, separates out the gas, which is fed to the surface via a pipe 14, while the liquid is fed to a pump 16 and on to the surface via apipeline 15.

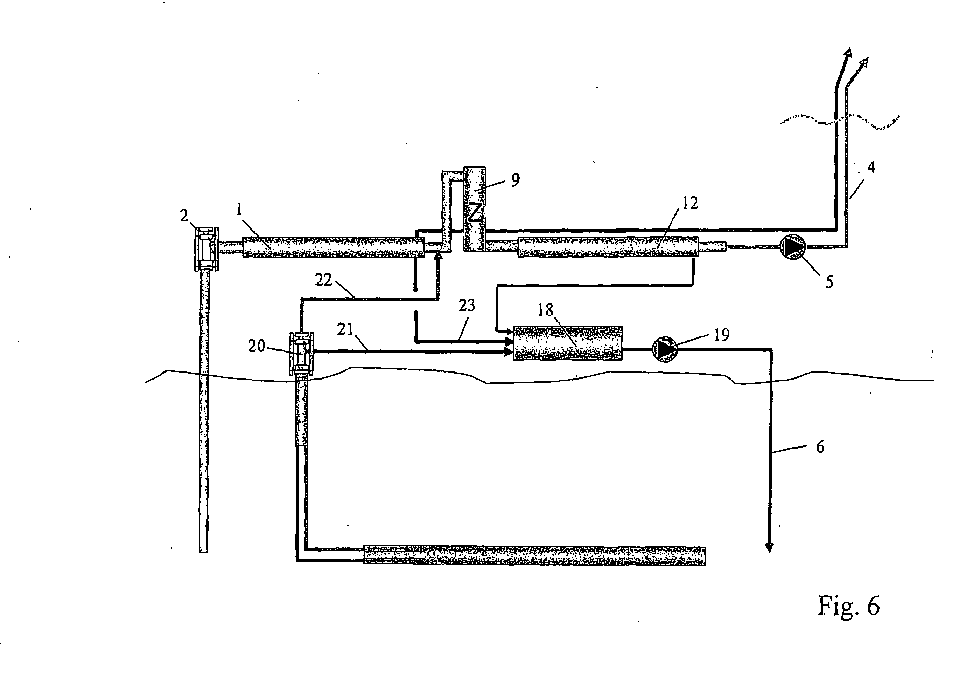

Figure 6 shows an example based on the solution shown in Figure 4, but which is adapted for a situation in which different quantities of oil, gas and water are produced in different ratios from two or more wells. From well 2, oil/gas/water are separated in a first separator 1 and oil/water in a second separator 12 with an intermediate coalescer 9, as explained previously.
Down-hole separation takes place in a second well 20. Water separated out from the first separator 2, the second separator 12 and the down-hole separator 18 is fed via respective pipes 21, 22, 23 to a buffer tank 18 for reinjection water. The water in the tank 18 is reinjected into the reservoir by means of a pump 19 via the pipe/well 6.

The present invention, as it is shown and described in the present application, offers several advantages:
1. The pipe separator tolerates high internal and external pressure and therefore allows the following processing tasks to take place at large sea depths:
   - Bulk gas/oil/water or oil/water separation.
   - Removal of water from crude oil to product specifications.
      * A pipe separator in combination with a Compact Electrostatic Coalescer (Kværner technology).
      * A pipe separator in combination with a Pect C Coalescer (Cyclotech technology).
   - Gas dehydration by means of a combination of gas dehydration technology (Minox technology) and a pipe separator.
2. It produces a quality of aqueous phase that allows reinjection.
3. Low water content in the oil and gas flows, thus allowing chemical-free hydrate control in connection with transport to downstream installations.
4. The pipe separator tolerates a high internal process pressure and can therefore be installed to advantage upstream of a choke valve on the well head. The high process pressure will improve the phase separation properties and allow reduced use of de-emulsifier or chemical-free separation, depending on the fluid properties.
5. For fields with acid oil and the potential for calcium naphthenate precipitation, sea bed processing with removal of water to 0.5%, performed at a high system pressure (i.e. lower pH in the aqueous phase on account of more CO in the aqueous phase), will eliminate problematic precipitation of calcium naphthenate or expensive topside installations designed to handle calcium naphthenate precipitation.

## Claims

1. An installation arranged on the sea bed for the separation of fluids, comprising at least one separator (1) forming a pipeline that is connected to one or more wells, each via an associated well head (2) or similar, and a pipeline, in which the components separated, oil, gas, water or combinations of these substances, are fed fully or partially from the installation to a platform, vessel, etc. on the surface or via collecting pipelines onto shore, or are reinjected into the formation beneath the sea bed,
**characterised in that** the separation is based on stratified flow and that each separator (1) consists of a long pipe that may form a major or minor part of the transport pipeline (18) from the well and has a diameter that is mainly equal to the diameter of the transport pipeline (18).

2. An installation in accordance with claim 1,
**characterised by**
a first separator (1), which is designed to separate gas and liquid, where the gas separated is fed via a pipeline (3) to the surface/shore, while the liquid separated is fed to a second pipe separator (8) for oil and water, after which the oil separated is fed to the surface/shore via a pump (5) and pipeline (4), while the water separated is reinjected into the reservoir by means of a pump (7) via a pipeline (6).

3. An installation in accordance with claim 2,
**characterised in that**
a compact electrostatic coalescer (9) is arranged between the first and second pipe separators (1 and 3).

4. An installation in accordance with claims 1-3,
**characterised in that**
a gas dehydration unit (11) and a subsequent gas/liquid separator (12) are arranged at the gas outlet from the first separator (1), whereby glycol is added via a pipeline (13) to the dehydration unit (11), while gas separated is fed from the separator (12) to the surface via a pipeline (14) and glycol and water separated are fed to the surface by means of a pump (16) via a pipeline (15).

## Patentansprüche

1. Einrichtung auf dem Meeresgrund zur Trennung von Flüssigkeiten, umfassend mindestens einen Trenner (1), der eine Rohrleitung bildet, die an ein oder mehrere Bohrlöcher angeschlossen ist, wobei jede über einen zugeordneten Bohrkopf (2) oder ähnliches angeschlossen ist, und einer Rohrleitung, wobei die Komponenten Öl, Gas, Wasser oder Kombinationen dieser Substanzen aufgespalten werden und vollständig oder teilweise aus der Einrichtung zu einer Plattform, einem Behälter usw. auf der Oberfläche oder durch Sammelrohrleitungen an die Küste geleitet werden, oder diese in die Formation unterhalb des Meeresgrundes zurückgeführt werden, **dadurch gekennzeichnet, dass** die Trennung auf einem geschichteten Strom basiert und dass jeder Trenner (1) aus einem langen Rohr besteht, das einen großen oder kleinen Teil der Transportleitung (18) aus dem Bohrloch bilden kann und einen Durchmesser aufweist, der im Wesentlichen gleich dem Durchmesser der Transportleitung (18) ist.

2. Einrichtung nach Anspruch 1, **dadurch gekennzeichnet, dass** ein erster Trenner (1), der zum Trennen von Gas und Flüssigkeit gestaltet ist, wobei das abgespaltene Gas über eine Rohrleitung (3) an die Oberfläche bzw. Küste geleitet wird, wobei die abgespaltene Flüssigkeit einem zweiten Rohrtrenner (8) für Öl und Wasser zugeführt wird, wonach das abgespaltene Öl mit einer Pumpe (5) und Rohrleitung (4) an die Oberfläche bzw. Küste geleitet wird, während das abgespaltene Wasser mit Hilfe einer Pumpe (7) und über eine Rohrleitung (6) zurück in das Sammelbecken eingespritzt wird.

3. Einrichtung nach Anspruch 2, **dadurch gekennzeichnet, dass** ein kompakter elektrostatischer Koaleszer (9) zwischen dem ersten und dem zweiten Rohrtrenner (1 und 3) angeordnet ist.

4. Einrichtung nach einem der Ansprüche 1 bis 3, **dadurch gekennzeichnet, dass** eine Gasdehydrationseinheit (11) und ein dahinter geschalteter Gas- bzw. Flüssigkeitstrenner (12) an dem Gasauslass von dem ersten Trenner (1) angeordnet sind, wobei Glykol über eine Rohrleitung (13) der Dehydrationseinheit (11) zugeführt wird und abgespaltenes Gas von dem Trenner (12) über eine Rohrleitung (14) an die Oberfläche und Glykol und abgespaltenes Wasser durch eine Pumpe (16) über die Rohrleitung (15) an die Oberfläche geleitet werden.

## Revendications

1. Installation disposée dans le lit marin pour la séparation de fluides, comprenant, au moins, un séparateur (1) formant une conduite qui est connectée à un ou à plusieurs puits, chacun à travers une tête de puits associée (2) ou similaire, et une conduite, dans laquelle les composants séparés, huile, gaz, eau, ou la combinaison de ces substances, sont conduits de façon totale ou partielle de l'installation jusqu'à la plate-forme, récipient, etc. sur la surface ou à travers des conduites d'évacuation sur la terre, ou sont réinjectés dans la formation sous le lit marin, **caractérisée en ce que** la séparation est basée sur l'écoulement stratifié et **en ce que** chaque séparateur (1) est constitué d'un long tuyau qui peut former une partie majeure ou mineure de la conduite de transport (18) du puits et qui a un diamètre principalement équivalent au diamètre de la conduite de transport (18).

2. Installation selon la revendication 1, **caractérisée en ce qu'**un premier séparateur (1), conçu pour séparer du gaz et du liquide, où le gaz séparé est conduit à travers une conduite (3) jusqu'à la surface/ terre, pendant que le liquide séparé est inséré dans un deuxième séparateur de tuyau (8) pour l'huile et l'eau, avec la conduite postérieure de l'huile séparé jusqu'à la surface/ terre à travers une pompe (5) et une conduite (4), pendant que l'eau séparé est réinjectée dans le réservoir à travers une pompe (7) moyennant une conduite (6).

3. Installation selon la revendication 2, **caractérisée en ce qu'**un coalesceur électrostatique compact (9) est disposé entre le premier et le deuxième séparateur de tuyau (1 et 3).

4. Installation selon les revendications 1-3, **caractérisée en ce qu'**une unité de déshydratation de gaz (11) et un séparateur de gaz/ liquide postérieur (12) sont disposés dans la sortie de gaz du premier séparateur (1), où du glycol est ajouté à travers une conduite (13) jusqu'à l'unité de déshydratation (11), pendant que le gaz séparé est alimenté à partir du séparateur (12) jusqu'à la surface à travers une conduite (14) et du glycol et de l'eau séparés sont conduits jusqu'à la surface moyennant une pompe (16) à travers une conduite (15).
